# EUROPEAN PATENT APPLICATION

(11) **EP 3 557 382 A1**
(43) Date of publication of application: **23.10.2019**
(21) Application number: 19170229.9
(22) Date of filing: 18.04.2019
(51) Int. Cl.: G06F 3/01, H01F 7/18

(54) **RESPONSIVE FORCE GENERATING DEVICE AND IN-VEHICLE DISPLAY UNIT INCLUDING RESPONSIVE FORCE GENERATING DEVICE**

(30) Priority: 20.04.2018 JP 2018081069
(71) Applicant: Alpine Electronics, Inc., Tokyo 145-8501 (JP)
(72) Inventor: KATO, Kazunari, Iwaki-city, Fukushima (JP)
(74) Representative: Schmitt-Nilson Schraud Waibel Wohlfrom Patentanwälte Partnerschaft mbB

(57) **Abstract**

A responsive force generating device capable of promptly providing large acceleration to an operation target member by solenoids includes a support bracket (22) provided with a first solenoid (31) and a second solenoid (35). The first solenoid (31) serves as an attractive operation solenoid configured to attract a mobile body (40) in an X1 direction, and the second solenoid (35) serves as a pressing operation solenoid configured to urge the mobile body (40) in the X1 direction. A drive current is supplied to the first solenoid (31) and the second solenoid (35) at the same time, so that the mobile body (40) promptly moves in the X1 direction with large acceleration and a responsive force is provided on, for example, a display screen.

## Description

The present invention relates to a responsive force generating device capable of promptly providing a responsive force to an operation target member by the operation performed by a solenoid when an operation unit provided in an operation target member is operated with a finger or a hand and an in-vehicle display unit including the responsive force generating device.

A touch operation input device described in JP 2000-194427 A includes a display screen having a plurality of operation function menu items displayed thereon. By performing touch operation on an input pad, a user can select any one of the operation function menu items and input information about the selection. At this time, a solenoid operates on the basis of a signal output from a control unit, and the input pad is vibrated. By using the touch operation input device that generates different types of vibration in accordance with an operation position on the input pad, the operator can get to know which part of the screen is touch-operated without looking at the screen.

JP 4-107804 A describes an invention relating to an electromagnetic solenoid. The electromagnetic solenoid is formed from two linear electromagnetic solenoids that are combined, and one movable iron core is placed inside the two electromagnetic solenoids so as to be movable in a reciprocating manner. The movable iron core has a load connected thereto. A sine wave signal is applied from a sinusoidal voltage signal generator to the winding wire of one of the linear electromagnetic solenoids. In addition, the sine wave signal is applied to the winding wire of the other linear electromagnetic solenoid via a phase shifter. By supplying alternating currents having a phase difference to the winding wires of the two linear electromagnetic solenoids, the movable iron core can be reciprocatingly driven at a frequency twice the frequency of the alternating signal.

As described in, for example, JP 2000-194427 A, it is well known to give a responsive force to the operator who is operating the input pad. According to the inventions described in JP 2000-194427 A and JP 4-107804 A, a solenoid is operated to give vibration to an input pad. However, merely applying vibration to the input pad is not sufficient as force feedback that is produced during the operation performed by the operator and that is felt by the operator. In particular, since the body of a vehicle continues to vibrate during running, it is difficult for an in-vehicle operation member to give a responsive force of a sufficient strength that can be clearly felt by the operator only by using vibration generated by a solenoid.

In addition, as illustrated in Fig. 1 of JP 4-107894 A, a load driven by a solenoid has a predetermined modulus of elasticity (a spring coefficient), and the movable portion has a natural frequency according to the modulus of elasticity. Consequently, it is inevitable to occur time delay corresponding to the period of natural frequency from the time the winding wire of the solenoid is energized until the load starts to operate. For this reason, a certain period of time is required from the time a command is sent from a control unit immediately after the input pad is operated with a finger or the like until the start of the solenoid to generate sufficient acceleration of the movable portion to be sensed by the finger. Accordingly, the operator experiences a time difference between the time of operation and the time of sensing the reactive force and, thus, it is difficult for the operator to obtain prompt force feedback during the operation.

Accordingly, it is an object of the present invention to provide a responsive force generating device capable of promptly generating a large impact responsive force through the operation performed by a solenoid and an in-vehicle display unit including the responsive force generating device.

The invention relates to a responsive force generating device and an in-vehicle diplay unit according to the appended claims. Embodiments are disclosed in the dependent claims.

According to an aspect of the present invention, a responsive force generating device for providing a responsive force to an operation target member at least part of which serves as an operation unit includes a mobile body having a predetermined mass and supported so as to be reciprocatingly movable along a straight line trajectory and a first solenoid and a second solenoid for providing the power of movement to the mobile body. The first solenoid serves as an attractive operation solenoid that exerts an attractive force on the mobile body in a responsive force generating direction along the straight line trajectory when energized, and the second solenoid serves as a pressing operation solenoid that urges the mobile body in the responsive force generating direction when energized.

The responsive force generating device according to exemplary aspects of the present invention includes a solenoid driving circuit configured to energize the first solenoid and the second solenoid at the same time.

According to embodiments of the present invention, it is desirable that the responsive force generating device further include a return spring member configured to urge the mobile body in a return direction that is opposite to the responsive force generating direction.

According to embodiments of the present invention, it is desirable that the responsive force generating device further include an impact receiving member configured to allow the mobile body moving in the responsive force generating direction to collide therewith and a return cushion member configured to allow the mobile body moving in the return direction to collide therewith. It is desirable that the modulus of elasticity in the direction along the straight line trajectory of the impact receiving member be greater than the modulus of elasticity of the return cushion member.

In embodiments of the responsive force generating device according to the present invention, the center line of the driving force exerted by the first solenoid and the center line of the driving force exerted by the second solenoid may be on the same line, and a movement line along which the center of gravity of the mobile body moves and the center line are not on the same line and are parallel to each other.

In addition, an in-vehicle display unit according to another aspect of the present invention includes any one of the above-described responsive force generating devices, and the operation target member includes a display screen.

According to embodiments of the present invention, it is desirable that the in-vehicle display unit include a regulation guide mechanism configured to regulate a movement direction in which the operation target member moves so that the movement direction is the direction along the straight line trajectory.

According to embodiments of the present invention, the responsive force generating device operates so as to attract a mobile body having a predetermined load in the responsive force generating direction by the first solenoid and push out the mobile body in the responsive force generating direction by the second solenoid. Consequently, the responsive force generating device is capable of moving the mobile body with large acceleration and, thus, giving, to an operation target member, a responsive force of such an impulsive intensity that the operator easily senses the responsive force. In addition, since the mobile body is moved in the responsive force generating direction by both the driving force of the first solenoid and the driving force of the second solenoid, the period of time from the time the driving command is submitted until the operator feels the responsive force can be reduced. In this manner, the responsive force generating device can promptly provide, to the operator, a responsive force that produces a large acceleration.

In addition, according to embodiments of the in-vehicle display unit of the present invention, even when the vehicle body vibration is applied to the display unit, the responsive force generated by the responsive force generating device can be sensed by the operator with high sensitivity.
Fig. 1 is a perspective view, as viewed from front, of an in-vehicle display unit including a responsive force generating device according to an embodiment of the present invention;
Fig. 2 is a perspective view, as viewed from rear, of the in-vehicle display unit including the response-force generating device according to an embodiment of the present invention;
Fig. 3 is a perspective view, as viewed from rear, of the responsive force generating device according to an embodiment of the present invention;
Fig. 4 is an enlarged perspective view of an acceleration generation unit which is a main part of the responsive force generating device illustrated in Fig. 3;
Fig. 5 is a plan sectional view of the main portion of the responsive force generating device taken along the line V - V of Fig. 4;
Fig. 6 is an enlarged perspective view of an acceleration generation unit which is a main part of a responsive force generating device according to another embodiment of the present invention;
Fig. 7 is a block diagram of a circuit that constitutes the responsive force generating device according to an embodiment of the present invention;
Fig. 8A is a diagram illustrating the operation timing of the responsive force generating device according to an embodiment of the present invention; and
Fig. 8B is a diagram illustrating the operation timing of a responsive force generating device according to a comparative example.

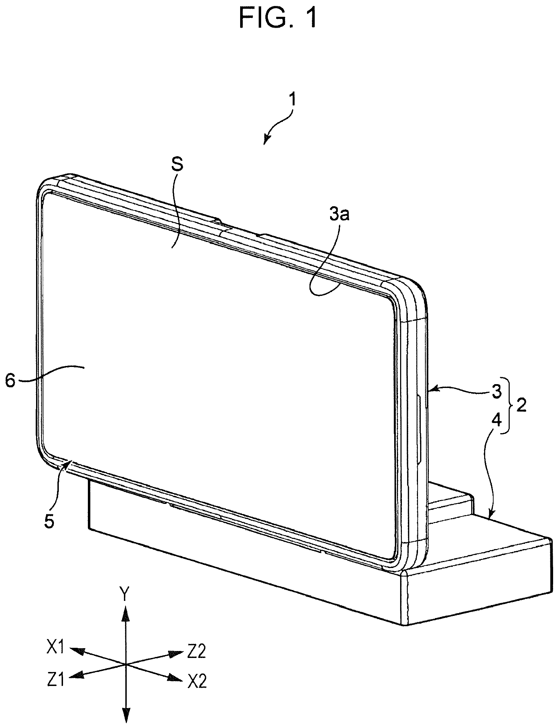

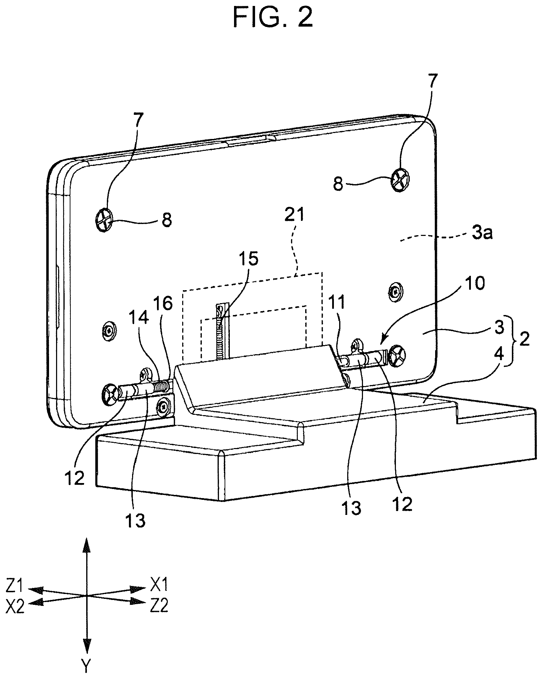

Figs. 1 and 2 illustrate an in-vehicle display unit 1 including a responsive force generating device 20 according to an embodiment of the present invention. In the in-vehicle display unit 1 and the responsive force generating device 20, the Z1 direction is defined as the forward direction, and the Z2 direction is defined as the rear direction. The Z1 direction is a direction in which a display screen faces the interior of the vehicle, and the Z2 direction is oriented toward the front of the vehicle in the traveling direction. The X1 direction is the left direction, the X2 direction is the right direction, and the Y direction is the vertical direction.

The in-vehicle display unit 1 has a base 2. The base 2 is made of a synthetic resin material or a light metal material. The base 2 has a support base 3 and a fixed base 4. The fixed base 4 is fixed to the interior or the surface of the front dashboard or the instrument panel in the passenger compartment. The support base 3 and the fixed base 4 are joined to each other via a pivot shaft (not illustrated) parallel to the X1-X2 direction, and the support base 3 is pivotable about the pivot shaft in the front-rear direction (the Z1-Z2 direction) on the fixed base 4. Alternatively, the support base 3 may be fixed to the fixed base 4 without pivoting, and the fixed base 4 may serve as a movable part of the elevating mechanism, the forward and backward moving mechanism, or the pivot supporting mechanism.

The support base 3 has a support space 3a in front (in the Z1 direction), and an operation target member 5 is disposed inside the support space 3a. The operation target member 5 is a display panel and includes display cells, such as color liquid crystal display cells or electroluminescence display cells. The display cells form a display screen 6. The display screen 6 is exposed to the front (in the Z1 direction) through the opening of the support space 3a so as to be oriented to the vehicle interior (in the display direction).

In the in-vehicle display unit 1, an image generated by the display cells is displayed on the display screen 6, and the display screen 6 serves as an operation unit having a transparent touch sensor S. The touch sensor S is a capacitance sensor in which a plurality of transparent electrodes are provided on a transparent substrate. If the finger of the operator touches the display screen 6, the electrostatic capacitance detected by the electrodes changes, and the coordinate position at which the finger is touched is detected by the change in the electrostatic capacity distribution at this time. Alternatively, the touch sensor S is a resistance sensor in which a transparent substrate having a transparent electrode formed on the entire surface thereof faces a transparent film having a transparent electrode formed on the entire surface thereof with a gap therebetween. If any portion of the transparent film of the resistance sensor is pressed, the transparent electrode formed on the transparent film is short circuited to the transparent electrode formed on the transparent substrate. Thus, a change in the resistance value between an electrode unit provided at the edge of the transparent electrode and the short-circuited portion is detected, and the coordinate position at which the finger is touched is determined. Note that in the operation target member 5, the touch sensor S may be provided as an operation unit in a region other than the display screen 6. Alternatively, a mechanical push button switch or the like may be provided as the operation unit.

The operation target member 5 is disposed inside the support space 3a with a margin that allows the operation target member 5 to be slightly moved in at least the X1-X2 direction. As illustrated in Fig. 2, the support base 3 has support holes 7 open therein, and an elastic bushing is interposed between a support screw member 8 fixed to the operation target member 5 and each of the support holes 7. The support hole 7, the support screw member 8, and the elastic bushing form an elastic support mechanism. The operation target member 5 is supported inside the support space 3a so as to be slightly movable in at least the X1-X2 direction due to the elastic deformation of the elastic bushing.

As illustrated in Fig. 2, a regulation guide mechanism 10 is provided between the support base 3 and the operation target member 5. The regulation guide mechanism 10 includes a shaft body 11 extending in the X1-X2 direction and a pair of fixing brackets 12, 12 with one fixed to the X1-side end portion and the other to the X2-side end portion of the shaft body 11. A pair of bearing members 13, 13 is provided between the two fixing brackets 12, 12 which are separated from each other in the X1-X2 direction. The bearing members 13, 13 have the shaft body 11 inserted thereinto. Either one of the pair of fixed brackets 12, 12 and the pair of bearing members 13, 13 is fixed to the support base 3, and the other is fixed to the operation target member 5. As illustrated in Fig. 2, a washer 16 is fixed to the shaft body 11, and a compression coil spring 14 is provided between the bearing member 13 on the X2 side and the washer 16. The shaft body 11 is inserted into and is disposed in a compression coil spring 14.

The operation target member 5 is supported by the regulation guide mechanism 10 so as to be movable relative to the support base 3 only in the X1-X2 direction. In addition, the compression coil spring 14 prevents the occurrence of unnecessary backlash in the X1-X2 direction of the operation target member 5. Furthermore, a tension coil spring 15 that extends in the Y direction is hooked between the shaft body 11 and the support base 3 or the operation target member 5. In this manner, the occurrence of unnecessary backlash of the operation target member 5 in the Y direction relative to the support base 3 is prevented.

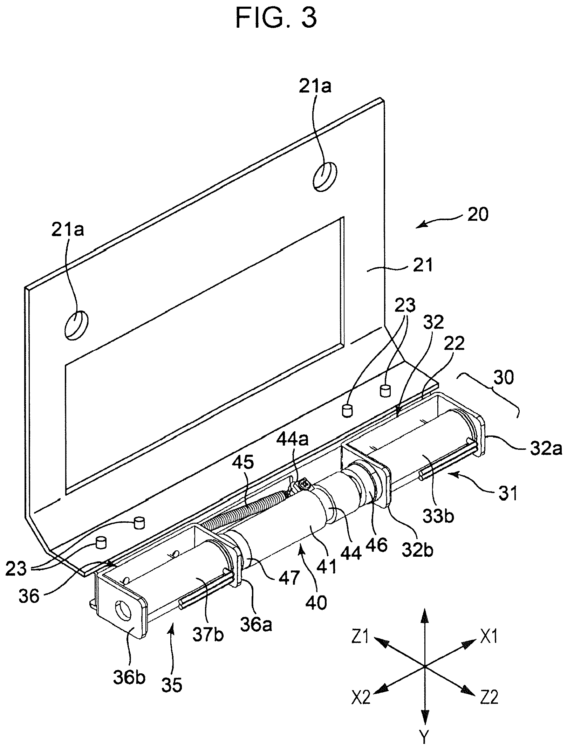

As illustrated in Fig. 3, the responsive force generating device 20 is composed of a transmission support member 21 and an acceleration generation unit 30 fixed to a lower portion of the transmission support member 21. The transmission support member 21 is made as a member having high rigidity in the X1-X2 direction, such as a metal plate or a synthetic resin plate. As illustrated in Fig. 2, the transmission support member 21 is inserted upward from the lower end portion of the support base 3 toward the inside of the support space 3a. The transmission support member 21 is located between the back surface of the operation target member 5 which faces backward (in the Z2 direction) and the front surface of the support base 3 which faces frontward (in the Z1 direction), and fixing holes 21a formed in the transmission support member 21 are fixed to the back surface of the operation target member 5 by fixing screws. In addition, the acceleration generation unit 30 is housed in the internal space of the fixed base 4. Acceleration directed in the X1 direction is generated by the acceleration generation unit 30 operating in the internal space of the fixed base 4. The acceleration is transmitted to the operation target member 5 via the transmission support member 21. Thus, a responsive force produced by the acceleration in the X1 direction acts on the finger or the hand that is in contact with the display screen 6 of the operation target member 5.

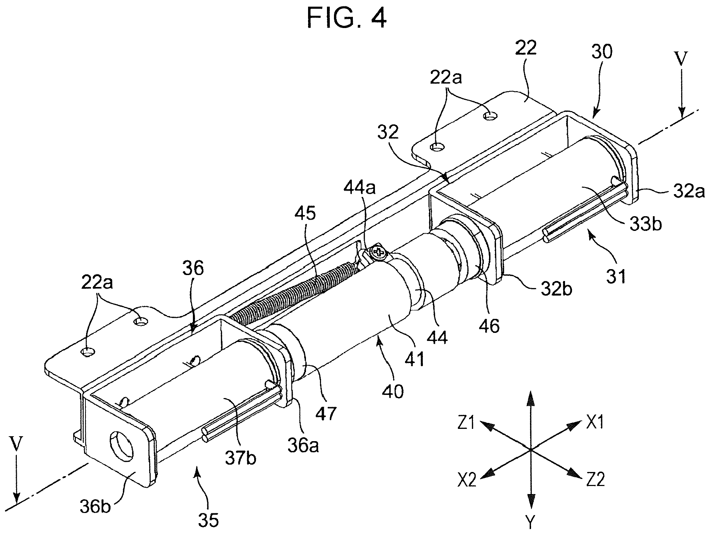

As illustrated in Fig. 3, Fig. 4, and Fig. 5, the acceleration generation unit 30 is provided with a support bracket 22. The support bracket 22 is made as a metal plate or is made of a synthetic resin material, and the support bracket 22 has high rigidity in the X1-X2 direction. As illustrated in Fig. 4, the support bracket 22 has support holes 22a formed therein. As illustrated in Fig. 3, each of support screws 23 inserted through one of the support holes 22a is screwed to the lower portion of the transmission support member 21, so that the support bracket 22 is fixed to the lower portion of the transmission support member 21. The acceleration generation unit 30 includes a first solenoid 31, a second solenoid 35, and a mobile body 40 driven by the first solenoid 31 and the second solenoid 35. The direction in which the acceleration generated by the acceleration generation unit 30 is applied, that is, the responsive force generating direction of the responsive force generating device 20 is the X1 direction.

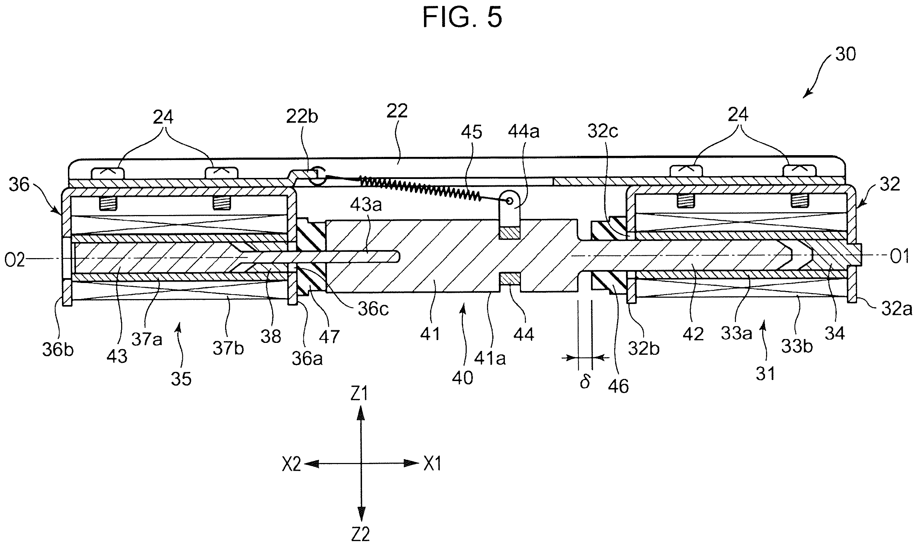

As illustrated in Fig. 5, the first solenoid 31 has a support yoke 32 formed by a magnetic material plate, such as a steel plate, and the support yoke 32 is fixed to the support bracket 22 by fixing screws 24. The support yoke 32 has a bent-over support end portion 32a on the X1 side and a bent-over support end portion 32b on the X2 side. The bent-over support end portion 32a and the bent-over support end portion 32b are parallel to each other and face each other. A cylindrical first bobbin 33a is fixed between the support end portion 32a and the support end portion 32b. The first bobbin 33a is formed of a non-magnetic material, and a first coil 33b is wound around the outer peripheral surface of the first bobbin 33a. A first fixed magnetic core 34 is provided inside the X1-side portion of the first bobbin 33a. The first fixed magnetic core 34 is formed of a magnetic material, such as iron, and is fixed to the support end portion 32a on the X1 side by, for example, press fitting or welding.

As illustrated in Fig. 5, the second solenoid 35 has a support yoke 36 formed by a magnetic material plate, such as a steel plate, and the support yoke 36 is fixed to the support bracket 22 by the fixing screws 24. The support yoke 36 has a bent-over support end portion 36a on the X1 side and a bent-over support end portion 36b on the X2 side. The bent-over support end portion 36a and the bent-over support end portion 36b are parallel to each other and face each other. A cylindrical second bobbin 37a is fixed between the support end portion 36a and the support end portion 36b. The second bobbin 37a is formed of a non-magnetic material, and a second coil 37b is wound around the outer peripheral surface of the second bobbin 37a. A second fixed magnetic core 38 is provided inside the X1-side portion of the second bobbin 37a. The second fixed magnetic core 38 is formed of a magnetic material, such as iron, and is fixed to the bent-over support end portion 36a on the X1 side by, for example, press fitting or welding.

The mobile body 40 has a mass body 41. The mass body 41 is made of a magnetic material, such as iron. The mass body 41 is formed into a columnar shape having a slightly larger diameter, and the mass body 41 has a predetermined mass. The mass body 41 has a cylindrical first movable magnetic core 42 integrally formed therewith, and the first movable magnetic core 42 extends in the X1 direction. The first movable magnetic core 42 has a diameter that is smaller than that of the mass body 41. The first movable magnetic core 42 is inserted into a hole portion 32c that is open in the support end portion 32b of the support yoke 32 provided in the first solenoid 31 so as to be freely slidable inside the first bobbin 33a in the X1-X2 direction. In the second solenoid 35, a cylindrical second movable magnetic core 43 is inserted into the second bobbin 37a and is disposed inside the second bobbin 37a so as to be freely slidable in the X1-X2 direction. The second movable magnetic core 43 has a connection shaft 43a integrated therewith. The connection shaft 43a extends in the X1 direction. The connection shaft 43a is formed so as to have a diameter smaller than that of the second movable magnetic core 43. The connection shaft 43a extends through the hole portion 36c formed in the support end portion 36a of the support yoke 36 in the X1 direction, and the connection shaft 43a is fixed to the mass body 41 by, for example, press fitting.

The first movable magnetic core 42 is slidably inserted into the first bobbin 33a, and the second movable magnetic core 43 is slidably inserted into the second bobbin 37a. Consequently, the mobile body 40 is supported so as to be freely reciprocatable along a straight line trajectory extending in the X1-X2 direction. In the acceleration generation unit 30, the X1 direction is the responsive force generating direction. The first solenoid 31 serves as an attractive operation solenoid that exerts an attractive force on the mobile body 40 in the responsive force generating direction (the Z1 direction). When the first coil 33b is energized, the first movable magnetic core 42 is magnetically attracted to the first fixed magnetic core 34. The second solenoid 35 serves as a pressing operation solenoid that exerts a pressing force on the mobile body 40 in the responsive force generating direction (the Z1 direction). When the second coil 37b is energized, the second movable magnetic core 43 is magnetically attracted to the second fixed magnetic core 38 and, thus, a pressing force is exerted on the mobile body 40 in the responsive force generating direction (the Z1 direction).

As illustrated in Fig. 5, according to the acceleration generation unit 30, a center line O1 of action of the driving force for attracting the first movable magnetic core 42 in the first solenoid 31 and a center line O2 of action of the driving force for pressing the second movable magnetic core 43 in the second solenoid 35 are located on the same line extending in the X1-X2 direction. In addition, the movement line along which the center of gravity of the mobile body 40 moves in the X1-X2 direction coincides with the center lines O1 and O2 of action.

In the mobile body 40, part of the mass body 41 is formed as a small-diameter portion 41a. The small-diameter portion 41a has a ring member 44 attached thereto. The ring member 44 has a spring hooking portion 44a formed therein. In addition, the support bracket 22 has a spring hooking portion 22b formed therein. A return spring member 45 is connected between the spring hooking portion 44a and the spring hooking portion 22b. The return spring member 45 is formed as a tension coil spring. The mobile body 40 is urged in the return direction (the X2 direction), which is opposite to the responsive force generating direction (the X1 direction), due to the elastic force of the return spring member 45 at all times.

As illustrated in Fig. 5, an impact receiving member 46 is bonded and fixed to the outer surface of the support end portion 32b (the surface facing in the X2 direction) of the support yoke 32. A return cushion member 47 is bonded and fixed to the outer surface of the support end portion 36a (the surface facing in the X1 direction) of the support yoke 36. When the first coil 33b and the second coil 37b are energized, the mobile body 40 moves in the responsive force generating direction (the X1 direction) and, thus, the mass body 41 collides with the impact receiving member 46. As a result, a responsive force is generated due to a collision impact (collision acceleration). The impact receiving member 46 is required not to generate a large collision noise and to apply a large impact force (acceleration: G) to the support bracket 22 and the transmission support member 21 via the first solenoid 31. For this reason, the impact receiving member 46 is formed of a hard rubber or a hard synthetic resin material. The return cushion member 47 aims to ease the impact force generated when the mobile body 40 is returned to the original position in the return direction (the X2 direction) by the elastic force of the return spring member 45 and provide a cushioning effect and a collision sound reduction effect. Accordingly, the return cushion member 47 is formed by an elastic body, such as a relatively soft rubber material or a soft synthetic resin material.

Let k1 be the modulus of elasticity (the longitudinal modulus of elasticity) at the time of compressive deformation of the impact receiving member 46 in the X1 direction, and let k2 be the modulus of elasticity (the longitudinal modulus of elasticity) at the time of compressive deformation of the return cushion member 47 in the X2 direction. Then, it is necessary that k1 be sufficiently larger than k2 (k1 >> k2).

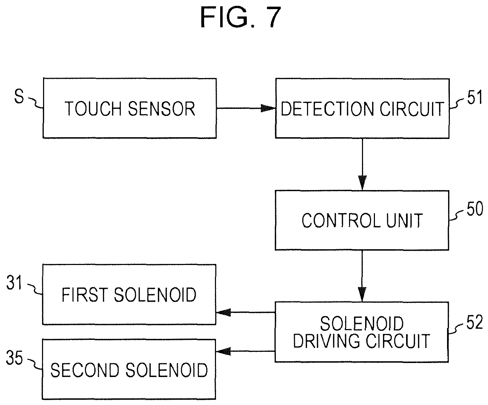

Fig. 7 illustrates the circuit configuration of a circuit unit attached to the responsive force generating device 20. The sensing output of the touch sensor S provided on the display screen 6 is detected by the detection circuit 51. Thereafter, the detection circuit 51 analyzes the contact position of the finger on the touch sensor S and informs the control unit 50 of the result of analysis. A drive command output from the control unit 50 is given to the solenoid driving circuit 52, and a drive current is supplied from the solenoid driving circuit 52 to the first coil 33b of the first solenoid 31 and the second coil 37b of the second solenoid 35 at the same time. A pulse-shaped short-time drive current is simultaneously applied to the first coil 33b and the second coil 37b. The drive current is given to each of the coils 33b and 37b once or is given a plurality of times at predetermined time intervals. The first coil 33b and the second coil 37b have the same number of windings and the same impedance. It is desirable that the peak value of the drive current supplied to the first coil 33b be the same as the peak value of the drive current supplied to the second coil 37b. By providing pulse-shaped drive currents having the same period and the same peak value are applied to the first coil 33b and the second coil 37b at the same time, the circuit configuration of the solenoid driving circuit 52 can be simplified.

The operation performed by the responsive force generating device 20 is described below. Fig. 5 illustrates the responsive force generating device 20 having the first coil 33b and the second coil 37b that are not energized and being stopped. When the responsive force generating device 20 is stopped, the mobile body 40 is pulled in the return direction (the X2 direction) by the elastic force of the return spring member 45. The mass body 41 is in contact with the return cushion member 47, and a gap δ is formed between the end portion on the X1 side of the mass body 41 and the impact receiving member 46 along the straight line trajectory extending in the movement direction (the X1-X2 direction) of the mobile body 40.

According to the in-vehicle display unit 1 illustrated in Fig. 1 and Fig. 2, an operator views the image displayed on the display screen 6 which is the operation unit of the operation target member 5 and touches any point of the display screen 6 with their finger or hand. At this time, the output of the sensing result from the touch sensor S is detected by a detection circuit 51 illustrated in Fig. 7, which identifies the point in the image at which the finger touches. Thereafter, the detection circuit 51 provides a detection signal to a control unit 50. Note that as a sensor of the operation unit provided in the operation target member 5, a force sensor may be provided in addition to the touch sensor S. The force sensor detects the movement of the operation target member 5 in the Z2 direction when the display screen 6 is pressed with a finger. In this case, when the display screen 6 is pressed with a finger, a detection signal is given from the force sensor to the control unit 50.

Upon receiving the detection signal, the control unit 50 determines what kind of operation is performed on the basis of the image signal of the image displayed on the display screen 6, and the processing operation based on the intended manipulation is started. In addition, upon receiving the detection signal, the control unit 50 submits a solenoid drive command to the solenoid driving circuit 52.

Upon receiving the solenoid drive command from the control unit 50, the solenoid driving circuit 52 supplies pulse-shaped drive currents having the same peak value to the first coil 33b of the first solenoid 31 and the second coil 37b of the second solenoid 35 at the same time. The drive currents are given to the first coil 33b and the second coil 37b once or a plurality of times at predetermined time intervals.

When the first coil 33b of the first solenoid 31 is energized, the first fixed magnetic core 34 is magnetized and, thus, the first movable magnetic core 42 is attracted to the first fixed magnetic core 34. At the same time, if the second coil 37b of the second solenoid 35 is energized, the second fixed magnetic core 38 is magnetized and, thus, the second movable magnetic core 43 is attracted to the second fixed magnetic core 38. The mobile body 40 is attracted in the X1 direction by the first solenoid 31 and is pressed in the X1 direction by the second solenoid 35. The attractive force and the pressing force have substantially the same magnitude and are simultaneously applied. Consequently, the mobile body 40 moves in the X1 direction with large acceleration, and the mass body 41 collides with the impact receiving member 46. Thus, the acceleration due to the collision acts on the first solenoid 31. The acceleration due to the collision is transmitted to the support bracket 22 and is further transmitted to the operation target member 5 via the transmission support member 21. As a result, the acceleration in the X1 direction impulsively acts on the operation target member 5, and the acceleration is given from the display screen 6 to the finger or hand of the operator in the form of a responsive force.

As illustrated in Fig. 2, the regulation guide mechanism 10 is provided between the operation target member 5 and the support base 3 so that the operation target member 5 is limited to move only in the X1-X2 direction relative to the support base 3. Consequently, the impulsive acceleration in the X1 direction generated in the acceleration generation unit 30 easily act to move the operation target member 5 only in the X1 direction. As a result, even when the display screen is constantly swinging in the front-rear direction (the Z1-Z2 direction) due to the vibration of the vehicle body, the finger or hand of the operator can effectively sense the responsive force since the display screen 6 moves with large acceleration in the X1 direction.

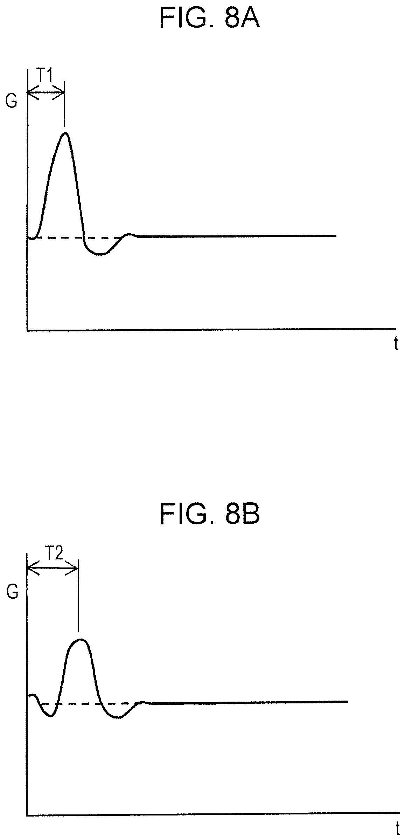

Fig. 8A illustrates a change in acceleration acting on the operation target member 5 during the operation performed by the responsive force generating device 20 according to the present embodiment. The abscissa represents the elapsed time (t), and the ordinate represents the acceleration (G) in the X1 direction. The start point of the elapsed time (t) is the time at which a solenoid drive command is given from the control unit 50 to the solenoid driving circuit 52. Upon receiving a solenoid drive command, the solenoid driving circuit 52 supplies drive currents to the first solenoid 31 and the second solenoid 35 at the same time and, thus, the mobile body 40 immediately moves in the X1 direction. Accordingly, as illustrated in Fig. 8A, an operation time T1 from reception of the solenoid drive command until the responsive force acts on the display screen 6 can be reduced. In addition, since the mobile body 40 is driven in the X1 direction by both the first solenoid 31 and the second solenoid 35, the acceleration of the mass body 41 in the X1 direction is large and, thus, the acceleration due to the impact applied to the impact receiving member 46 increases. Consequently, the peak value of the acceleration (G) for causing the display screen 6 to move in the X1 direction is increased. As a result, a large responsive force can be given to the operator's finger.

Furthermore, the modulus of elasticity (the longitudinal modulus of elasticity) k1 for compressive deformation of the impact receiving member 46 in the X1 direction is set to a value sufficiently larger than the modulus of elasticity (the longitudinal modulus of elasticity) k2 for compressive deformation of the return cushion member 47 in the X2 direction. When the mass body 41 collides with the impact receiving member 46, the natural frequency at the time when the responsive force generating device 20 and the operation target member 5 move in the X1 direction is determined by the modulus of elasticity k1 of the impact receiving member 46, the mass of the operation target member 5, and the mass of the responsive force generating device 20. By increasing the modulus of elasticity k1, the natural frequency is increased, and the vibration period is decreased. As a result, the operation time T1 can be further reduced.

Fig. 8B illustrates the operation performed by a responsive force generating device according to a comparative example. According to the responsive force generating device of the comparative example, a solenoid provided on the X1 side of the mobile body exerts an attractive force in the X1 direction, and a solenoid provided on the X2 side exerts an attractive force in the X2 direction. In addition, the mobile body is urged in the X1 direction by a tension coil spring. According to the comparative example, when a solenoid command signal is submitted from a control unit, the solenoid on the X2 side is energized first and, thus, the mobile body is pulled in the X2 direction, and the tension coil spring expands. Immediately afterwards, the power supplied to the solenoid on the X2 side is stopped. At the same time, power is supplied to the solenoid on the X1 side. Thus, the mobile body is attracted in the X1 direction by the solenoid on the X1 side, and the mobile body collides with an impact receiving member. In this manner, acceleration is given to the operation target member.

As illustrated in Fig. 8B, according to the responsive force generating device of the comparative example, when a solenoid operation command is submitted, the solenoid on the X2 side performs an attractive operation. Thereafter, the solenoid on the X1 side performs an attractive operation. Accordingly, an operation time T2 from the submission of the solenoid operation command until the responsive force acts on the display screen increases. In addition, since the force to move the mobile body in the X1 direction is only the attraction force of the solenoid on the X1 side and the elastic force of the tension coil spring, the peak value of the acceleration (G) is lower than the peak value of the acceleration induced by the responsive force generating device 20 illustrated in Fig. 8A.

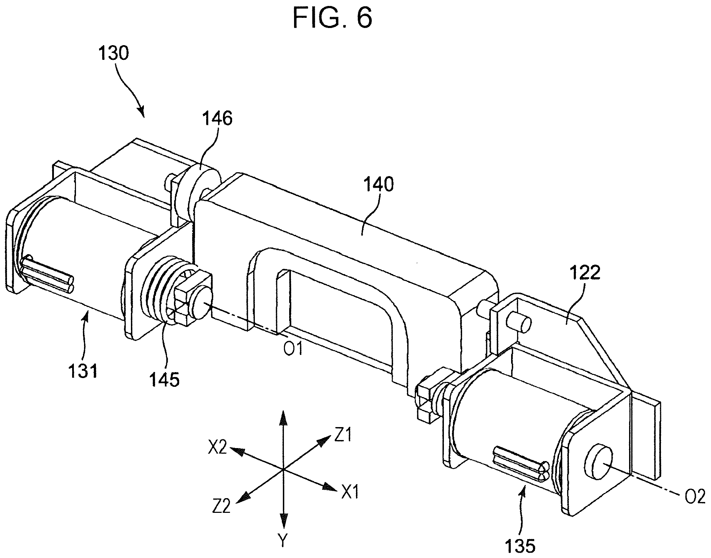

Fig. 6 illustrates an acceleration generation unit 130 provided in a responsive force generating device according to a second embodiment of the present invention.

According to the acceleration generation unit 130, a first solenoid 131 is provided on the X2 side, and a second solenoid 135 is provided on the X1 side. The first solenoid 131 is an attractive operation solenoid that exerts an attractive force in the X2 direction when the first coil is energized, and the second solenoid 135 is a pressing operation solenoid that exerts a pressing force in the X2 direction when the second coil is energized. A center line O1 of action of the driving force of the first solenoid 131 and a center line O2 of action of the driving force of the second solenoid 135 are located on the same line. The mobile body 140 is supported by the support bracket 122 so as to be freely movable in the X1-X2 direction, and the driving forces of the first solenoid 131 and the second solenoid 135 are transmitted to the mobile body 140. The movement line of the center of gravity of the mobile body 140 in the X1-X2 direction does not coincide with the center lines O1 and O2 of action and is parallel to the center lines O1 and O2 of action. According to the structure, another member can be disposed between the first solenoid 131 and the second solenoid 135 so as to be aligned with the mobile body 140.

The movable magnetic core of the first solenoid 131 is provided with a return spring member 145 that urges the mobile body 140 in the return direction (the X1 direction). In addition, the support bracket 122 is provided with an impact receiving member 146 with which the mobile body 140 collides when the mobile body 140 moves in the responsive force acting direction (the X2 direction). Even in the acceleration generation unit 130 according to the second embodiment, the mobile body 140 is operated with large acceleration in the responsive force acting direction (the X2 direction) by the attractive force of the first solenoid 131 and the pressing force of the second solenoid 135.

While the above embodiment has been described with reference to the operation target member 5 having a display screen, the operation target member is not limited thereto. For example, part of the instrument panel provided in the vehicle compartment of an automobile may serve as an operation target member including a capacitance sensor or a mechanical operation button, and the operation target member may generate a responsive force.

While the embodiment has been described with reference to the responsive force generating device 20 in which the acceleration of the acceleration generation unit 30 or 130 is given to the operation target member 5 via the transmission support member 21, the acceleration generation unit 30 or 130 may be attached to the operation target member 5. Thus, the acceleration from the acceleration generation unit 30 or 130 may directly act on the operation target member 5.

In the present disclosure, an in-vehicle display unit shall be understood as a display unit capable to be installed in a vehicle. According to an embodiment, the display unit (or in-vehicle display unit) is installed in a vehicle.

## Claims

1. A responsive force generating device (20) for providing a responsive force to an operation target member (5) at least part of which serves as an operation unit, comprising:
a mobile body (40) having a predetermined mass and supported so as to be reciprocatingly movable along a straight line trajectory; and
a first solenoid (31) and a second solenoid (35) configured to provide power of movement to the mobile body (40),
wherein the first solenoid (31) serves as an attractive operation solenoid that exerts an attractive force on the mobile body (40) in a responsive force generating direction along the straight line trajectory when energized, and
wherein the second solenoid (35) serves as a pressing operation solenoid that urges the mobile body (40) in the responsive force generating direction when energized.

2. The responsive force generating device according to Claim 1, further comprising:
a solenoid driving circuit (52) configured to energize the first solenoid (31) and the second solenoid (35) at the same time.

3. The responsive force generating device according to Claim 1 or 2, further comprising:
a return spring member (45) configured to urge the mobile body (40) in a return direction that is opposite to the responsive force generating direction.

4. The responsive force generating device according to Claim 3, further comprising:
an impact receiving member (46) configured to allow the mobile body (40) moving in the responsive force generating direction to collide therewith; and
a return cushion member (47) configured to allow the mobile body (40) moving in the return direction to collide therewith,
wherein the modulus of elasticity in the direction along the straight line trajectory of the impact receiving member (46) is greater than the modulus of elasticity of the return cushion member (47).

5. The responsive force generating device according to any one of Claims 1 to 4, wherein the center line of the driving force exerted by the first solenoid (31) and the center line of the driving force exerted by the second solenoid (35) are on the same line, and
wherein a movement line along which the center of gravity of the mobile body (40) moves and the center line are not on the same line and are parallel to each other.

6. An in-vehicle display unit comprising:
the responsive force generating device according to any one of Claims 1 to 5,
wherein the operation target member (5) includes a display screen (6).

7. The in-vehicle display unit according to Claim 6, further comprising:
a regulation guide mechanism (10) configured to regulate a movement direction in which the operation target member (5) moves so that the movement direction is the direction along the straight line trajectory.
